# EUROPEAN PATENT APPLICATION

(11) **EP 1 550 831 A1**
(43) Date of publication of application: **06.07.2005**
(21) Application number: 03797718.8
(22) Date of filing: 19.09.2003
(51) Int. Cl.: F25B 15/00

(54) **AIR-COOLED ABSORPTION TYPE REFRIGERATING PLANT**

(30) Priority: 20.09.2002 JP 2002276259
(71) Applicant: Daikin Industries, Ltd., Osaka-shi, Osaka 530-8323 (JP)
(72) Inventor: OHIRA, Sin OSAKA GAS CO., LTD., Osaka-shi, Osaka 541-0046 (JP); TANIGUCHI, Yoshihito TOHO GAS CO., LTD., Nagoya-shi, Aichi 456-8511 (JP); OKUDA, Noriyuki Daikin Industries, Ltd., Sakai-shi, Osaka 591-8511 (JP); YASUO, Kouichi Daikin Industries, Ltd., Sakai-shi, Osaka 591-8511 (JP); YAKUSHIJI, Fumiaki Daikin Industries, Ltd., Sakai-shi, Osaka 591-8511 (JP); KAWABATA, Katsuhiro Daikin Industries Ltd., Sakai-shi, Osaka 591-8511 (JP); KAWAI, Mitsuji Daikin Industries Ltd., Sakai-shi, Osaka 591-8511 (JP); UEDA, Hiroki Daikin Industries Ltd., Sakai-shi, Osaka 591-8511 (JP); TANIMOTO, Keisuke Daikin Industries Ltd., Sakai-shi, Osaka 591-8511 (JP)
(74) Representative: HOFFMANN - EITLE
(86) International application number: PCT/JP2003/012038
(87) International publication number: WO 2004/027327

(57) **Abstract**

In a two stage air-cooled absorption refrigerating apparatus, a machine room (**2**) including a high-temperature generator (**G**_{**2**}), a low-temperature generator **(G**_{**1**}**)** and a space-heating heat exchanger (**B**) is provided at the longitudinal center of an apparatus body **(1).** On both sides of the machine room **(2)** in the longitudinal direction of the apparatus body **(1),** air-cooled heat exchangers **(3)** are arranged, each of the air-cooled heat exchangers including: an air-cooled heat exchanger unit **(X)** made of air-cooled absorbers **(A)** which are arranged on two opposed sides of the air-cooled heat exchanger **(3)** orthogonal to a barrier wall against the machine room **(2),** an air-cooled condenser **(C)** which is arranged between the lower ends of the air-cooled absorbers (**A**) to provide air intake surfaces below the air-cooled absorbers **(A)** and fans **(F)** which are arranged between the upper portions of the air-cooled absorbers **(A);** and a vaporizer **(E)** which is arranged substantially in the middle of the air-cooled absorbers **(A).** Thus, the air-cooled heat exchangers **(3)** are located on both sides of the machine room **(2).**

## Description

### TECHNICAL FIELD

The present invention relates to an air-cooled absorption refrigerating apparatus.

### BACKGROUND ART

As an example of conventionally known air-cooled absorption refrigerating apparatuses, there is an air-cooled absorption refrigerating apparatus including air inlets each arranged on three sides of a cube-shaped apparatus body, two air-cooled absorbers and a single air-cooled condenser which are arranged in correspondence with the air inlets and fans which are arranged in an upper part in the center of the apparatus body. With this configuration, a heat transfer area of the air-cooled absorbers and the air-cooled condenser is kept as large as possible (for example, see Japanese Unexamined Patent Publication No. H1-225868).

In the thus configured air-cooled absorption refrigerating apparatus, air is inhaled by the operation of the fans through the air inlets formed on the three sides of the refrigerating apparatus and passed through the air-cooled absorbers and the air-cooled condenser to cool an absorbent and coolant vapor effectively. The air is then blown upward out of the refrigerating apparatus.

### PROBLEMS THAT THE INVENTION IS TO SOLVE

Since the conventional air-cooled absorption refrigerating apparatus is provided with the air inlets on the three sides thereof, the maintenance of the refrigerating apparatus is carried out only from the one remaining side. Therefore, if two or more refrigerating apparatuses are connected for greater capacity, it becomes difficult to make space for the maintenance and space for the air inhalation by the air inlets.

Further, if the air-cooled absorbers and the air-cooled condenser are designed to increase a heat dissipation area thereof with a view to increasing the capacity of the refrigerating apparatus, the size of the apparatus body becomes large.

In view of the above problems, the present invention has been achieved. An object of the present invention is to reduce installation space for the refrigerating apparatus including the air inhalation space and the maintenance space and to keep a proper weight balance of the refrigerating apparatus by connecting the machine room and the air-cooled heat exchangers in the longitudinal direction of the apparatus body.

### DISCLOSURE OF THE INVENTION

A first invention of the present application is directed to a two stage air-cooled absorption refrigerating apparatus comprising: an air-cooled absorber **A** which is divided into an upper air-cooled absorber **A**_{**1**} and a lower air-cooled absorber **A**_{**2**}; and a vaporizer **E** which is divided into an upper vaporizer **E**_{**1**} and a lower vaporizer **E**_{**2**} in correspondence with the divided air-cooled absorbers **A**_{**1**} and **A**_{**2**} such that a secondary refrigerant **Y** is fed from the lower vaporizer **E**_{**2**} to the upper vaporizer **E**_{**1**}.

At the longitudinal center of an apparatus body **1,** a machine room **2** including a high-temperature generator **G**_{**2**}, a low-temperature generator **G**_{**1**} and a space-heating heat exchanger **B** is provided.

Further, on both sides of the machine room **2** in the longitudinal direction of the apparatus body **1,** air-cooled heat exchangers **3** are arranged, each of the air-cooled heat exchangers including: an air-cooled heat exchanger unit **X** made of air-cooled absorbers **A** which are arranged on two opposed sides of the air-cooled heat exchanger **3** orthogonal to a barrier wall against the machine room **2,** an air-cooled condenser **C** which is arranged between the lower ends of the air-cooled absorbers **A** to provide air intake surfaces below the air-cooled absorbers **A** and fans **F** which are arranged between the upper portions of the air-cooled absorbers **A;** and a vaporizer **E** which is arranged substantially in the middle of the air-cooled absorbers **A.**

The vaporizer **E** is so arranged that the longitudinal direction thereof is parallel to the air intake surfaces of the air-cooled absorbers **A.**

Further, the air-cooled condenser **C** is arranged in an inverted-V configuration which is high at the center and low at both ends when viewed in vertical section.

With the above configuration, the air-cooled heat exchangers **3** are located on both sides of the machine room **2.** This provides better weight balance of the refrigerating apparatus as a whole, allowing much easier transportation and installation thereof.

Since space **S**_{**1**} for the maintenance of the machine room **2** and space **S**_{**2**} for air inhalation into the air-cooled heat exchangers **3** are provided at the same side of the refrigerating apparatus, the maintenance space **S**_{**1**} is easily provided. Further, even if two or more refrigerating apparatuses are connected, the air inhalation space **S**_{**2**} and the maintenance space **S**_{**1**} are easily obtained.

Air **W** inhaled by the operation of the fans **F** passes through the air-cooled absorbers **A** and the air-cooled condenser **C** and then goes upward via flow paths formed at both sides of the vaporizer **E** to be blown to the outside. Since the vaporizer **E** is so arranged that the longitudinal direction thereof is parallel to the air intake surfaces of the air-cooled absorbers **A**, the refrigerating apparatus is prevented from increasing in footprint area. Further, the air-cooled absorbers **A** and the air-cooled condenser **C** are provided with a large heat dissipation area and air flows with less resistance.

Since the vaporizer **E** is placed in dead space between the air-cooled absorbers **A,** the refrigerating apparatus can be reduced in size.

Further, since the air-cooled condenser **C** is arranged in the inverted-V configuration which is high at the center and low at both ends when viewed in vertical section, the air-cooled condenser **C** is given with a large heat dissipation area without an increase in installation area thereof.

According to a second invention of the present application, in respect of the air-cooled absorption refrigerating apparatus of the first invention, the air-cooled heat exchanger **3** may be separatably modularized such that two or more air-cooled heat exchangers **3** are connected to the machine room **2.** This configuration allows increasing the capacity of the air-cooled heat exchanger **3** with ease and keeping the air inhalation space **S**_{**2**} and the maintenance space **S**_{**1**} with ease.

According to a third invention of the present application, in respect of the air-cooled absorption refrigerating apparatus of the first invention, two or more unit components **Z** each including the machine room **2** and the air-cooled heat exchangers **3** may be connected. With this configuration, the air inhalation space **S**_{**2**} and the maintenance space **S**_{**1**} are easily provided even if two or more unit components **Z** are connected for greater capacity.

### EFFECT OF THE INVENTION

According to the first invention of the present application, a two stage air-cooled absorption refrigerating apparatus is configured to include: an air-cooled absorber **A** which is divided into an upper air-cooled absorber **A**_{**1**} and a lower air-cooled absorber **A**_{**2**}**;** and a vaporizer **E** which is divided into an upper vaporizer **E**_{**1**} and a lower vaporizer **E**_{**2**} in correspondence with the divided air-cooled absorbers **A**_{**1**} and **A**_{**2**} such that a secondary refrigerant **Y** is fed from the lower vaporizer **E**_{**2**} to the upper vaporizer **E**_{**1**}, wherein a machine room **2** including a high-temperature generator **G**_{**2**}**,** a low-temperature generator **G**_{**1**} and a space-heating heat exchanger **B** is provided at the longitudinal center of an apparatus body **1,** air-cooled heat exchangers **3** are arranged on both sides of the machine room **2** in the longitudinal direction of the apparatus body **1,** each of the air-cooled heat exchangers including: an air-cooled heat exchanger unit **X** made of air-cooled absorbers **A** which are arranged on two opposed sides of the air-cooled heat exchanger **3** orthogonal to a barrier wall against the machine room **2,** an air-cooled condenser **C** which is arranged between the lower ends of the air-cooled absorbers **A** to provide air intake surfaces below the air-cooled absorbers **A** and fans **F** which are arranged between the upper portions of the air-cooled absorbers **A;** and a vaporizer **E** which is arranged substantially in the middle of the air-cooled absorbers **A.** Thus, the air-cooled heat exchangers **3** are located on both sides of the machine room **2.** This provides better weight balance of the refrigerating apparatus as a whole, allowing much easier transportation and installation thereof.

Since space **S**_{**1**} for the maintenance of the machine room **2** and space **S**_{**2**} for air inhalation into the air-cooled heat exchangers **3** are provided at the same side of the refrigerating apparatus, the maintenance space **S**_{**1**} is easily provided. Further, even if two or more refrigerating apparatuses are connected, the air inhalation space **S**_{**2**} and the maintenance space **S**_{**1**} are easily obtained.

Air **W** inhaled by the operation of the fans **F** passes through the air-cooled absorbers **A** and the air-cooled condenser **C** and then goes upward via flow paths formed at both sides of the vaporizer **E** to be blown to the outside. Since the vaporizer **E** is so arranged that the longitudinal direction thereof is parallel to the air intake surfaces of the air-cooled absorbers **A**, the refrigerating apparatus is prevented from increasing in footprint area. Further, the air-cooled absorbers **A** and the air-cooled condenser **C** are provided with a large heat dissipation area air flows with less resistance.

Since the vaporizer **E** is placed in dead space between the air-cooled absorbers **A**, the refrigerating apparatus can be reduced in size.

Further, since the air-cooled condenser **C** is arranged in the inverted-V configuration which is high at the center and low at both ends when viewed in vertical section, the air-cooled condenser **C** is given with a large heat dissipation area without an increase in installation area thereof.

According to the second invention of the present application, in respect of the air-cooled absorption refrigerating apparatus of the first invention, the air-cooled heat exchanger **3** is separatably modularized such that two or more air-cooled heat exchangers **3** are connected to the machine room **2.** This configuration allows increasing the capacity of the air-cooled heat exchanger **3** with ease and keeping the air inhalation space **S**_{**2**} and the maintenance space **S**_{**1**} with ease.

According to a third invention of the present application, in respect of the air-cooled absorption refrigerating apparatus of the first invention, two or more unit components **Z** each including the machine room **2** and the air-cooled heat exchangers **3** are connected. With this configuration, the air inhalation space **S**_{**2**} and the maintenance space **S**_{**1**} are easily provided even if two or more unit components **Z** are connected for greater capacity.

### BRIEF DESCRIPTION OF THE DRAWINGS

FIG. **1** is an oblique view illustrating a configuration of an air-cooled absorption refrigerating apparatus according to a first embodiment of the present invention.
FIG. **2** is a vertical section illustrating the air-cooled absorption refrigerating apparatus according to the first embodiment of the present invention.
FIG. **3** is a plan view schematically illustrating the air-cooled absorption refrigerating apparatus according to the first embodiment of the present invention.
FIG. **4** is a plan view schematically illustrating two or more connected air-cooled absorption refrigerating apparatuses according to the first embodiment of the present invention.
FIG. **5** is a plan view schematically illustrating the air-cooled absorption refrigerating apparatus according to the first embodiment of the present invention with increased capacity.
FIG. **6** is an operation cycle flow of the air-cooled absorption refrigerating apparatus according to the first embodiment of the present invention.

### BEST MODE FOR CARRYING OUT THE INVENTION

Hereinafter, explanation is given of a preferable embodiment of the present invention with reference to the attached drawings.

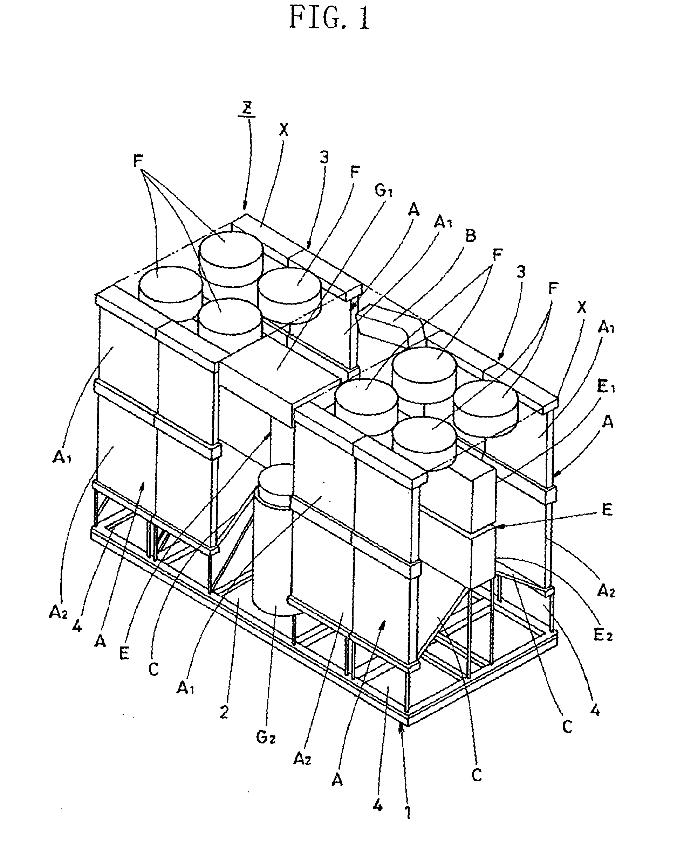

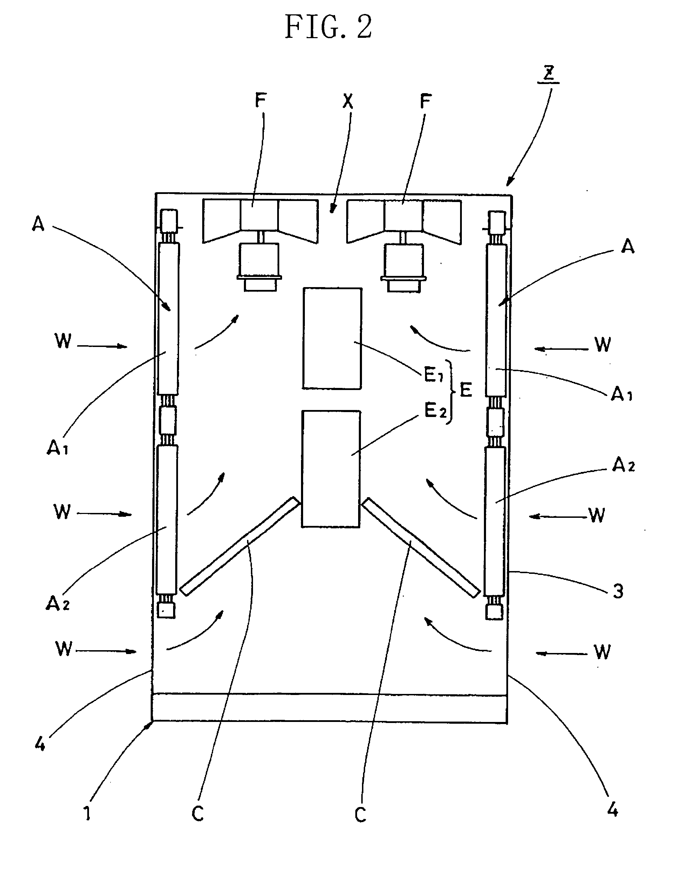

As shown in FIGS. **1** and **2,** an air-cooled absorption refrigerating apparatus includes a machine room **2** which is located at the longitudinal center of a substantially rectangular solid-shaped apparatus body **1** and air-cooled heat exchangers **3** which are arranged on both sides of the machine room **2** in the longitudinal direction of the apparatus body **1.**

In the machine room **2,** there are provided a high-temperature generator **G**_{**2**} and a low-temperature generator **G**_{**1**} which are located downward and upward at one side of the apparatus body **1,** respectively, and a space-heating heat exchanger **B** which is located upward at the other side of the apparatus body **1.** Though not shown, a barrier wall is provided between the machine room **2** and each of the air-cooled heat exchangers **3.** With this configuration, maintenance of the devices installed in the machine room **2** (e.g., the high-temperature generator **G**_{**2**}) is easily carried out from the sidewall side of the apparatus body **1.**

Each of the air-cooled heat exchangers **3** is provided with an air-cooled heat exchanger unit **X** including two air-cooled absorbers **A**, two air-cooled condensers **C** and four fans **F,** and a vaporizer **E.** Though not shown, the side of each of the air-cooled heat exchangers **3** which is apart from the machine room **2** is closed with a partition plate.

The air-cooled absorbers **A** are arranged on two opposed sides of the air-cooled heat exchanger **3** which are orthogonal to the barrier wall against the machine room **2.**

The air-cooled condensers **C** are arranged between the lower ends of the air-cooled absorbers **A** in an inverted-V configuration which is high at the center and low at both ends thereof to provide air intake surfaces **4** below the air-cooled absorbers **A.** In this embodiment, two air-cooled condensers **C** are used in the inverted-V configuration, but a single air-cooled condenser **C** which is bent in the inverted-V configuration may also be used.

The vaporizer **E** is arranged substantially in the middle of the air-cooled absorbers A and in the vicinity of the highest part of the air-cooled condensers **C** in such a manner that the longitudinal direction of the vaporizer **E** is parallel to the air intake surfaces of the air-cooled absorbers **A.**

The fans **F** are arranged between the upper portions of the air-cooled absorbers **A** and above the evaporator **E** to rotate about vertical rotation axes thereof, thereby blowing the air upward to the outside.

Each of the air-cooled absorbers **A** is divided into an upper air-cooled absorber **A**_{**1**} and a lower air-cooled absorber **A**_{**2**}**.** The vaporizer **E** is also divided into an upper vaporizer **E**_{**1**} and a lower vaporizer **E**_{**2**} to correspond with the divided air-cooled absorbers **A**_{**1**} and **A**_{**2**}**.** As described later, a concentrated solution flows linearly from the low-pressure upper air-cooled absorber **A**_{**1**} to the low-pressure lower air-cooled absorber **A**_{**2**}**.**

With the above configuration, the air-cooled heat exchangers **3** are located on both sides of the machine room **2.** This provides better weight balance of the refrigerating apparatus as a whole, allowing much easier transportation and installation thereof.

Air **W** inhaled by the operation of the fans **F** passes through the air-cooled absorbers **A** and the air-cooled condensers **C** and then goes upward via flow paths at both sides of the vaporizer **E** to be blown to the outside. Since the vaporizer **E** is so arranged that the longitudinal direction thereof is parallel to the air intake surfaces of the air-cooled absorbers **A**, the refrigerating apparatus is prevented from increasing in footprint area. Further, the air-cooled absorbers **A** and the air-cooled condenser **C** are provided with a large heat dissipation area and air flows with less resistance. Moreover, since the vaporizer **E** is placed in dead space between the air-cooled absorbers **A**, the size of the refrigerating apparatus can be reduced.

In this embodiment, the air-cooled condensers **C** are arranged in the inverted-V configuration which is high at the center and low at the both ends when viewed in vertical section. Therefore, the heat dissipation area of the air-cooled condensers **C** increases, improving the condenser performance. Further, space occupied by the condensers is reduced.

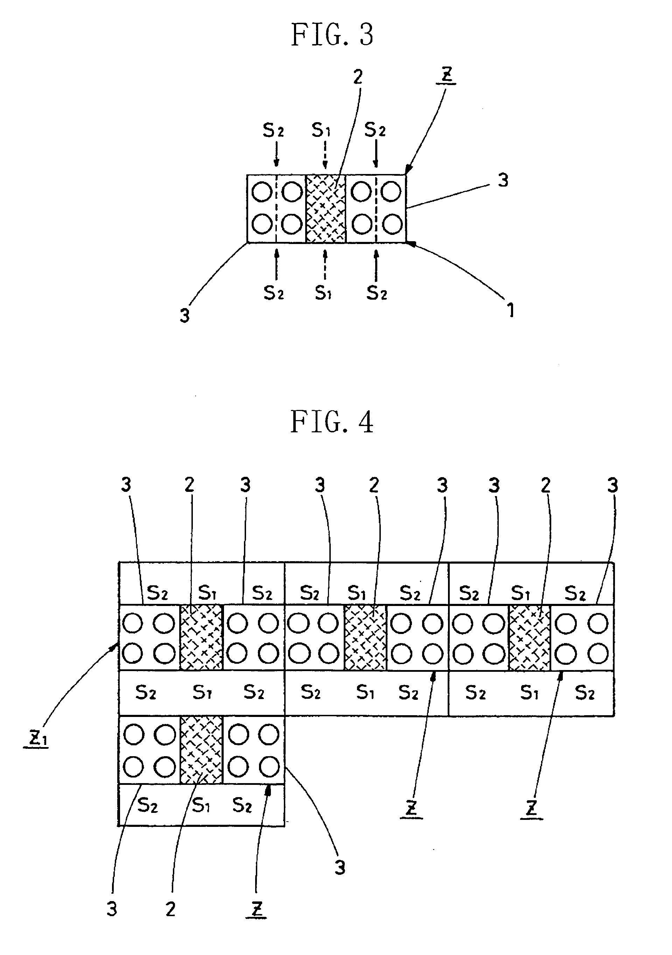

According to the air-cooled absorption refrigerating apparatus of this embodiment, a unit component **Z** including the machine room **2** and the air-cooled heat exchangers **3** arranged on both sides of the machine room **2** in the longitudinal direction of the apparatus body **1** is obtained as shown in FIG. **3.** Thus, space **S**_{**1**} for the maintenance of the machine room **2** and spaces **S**_{**2**} for the air inhalation of the air-cooling heat exchangers **3** are provided at the same side of the refrigerating apparatus. Since the air inhalation spaces **S**_{**2**} are essential for the air-cooled absorption refrigerating apparatus, the maintenance space **S**_{**1**} for the machine room **2** is inevitably provided.

Further, if two or more unit components **Z** are connected as shown in FIG. **4,** the air inhalation spaces **S**_{**2**} and the maintenance spaces **S**_{**1**} are easily obtained without an increase in footprint area of the refrigerating apparatus.

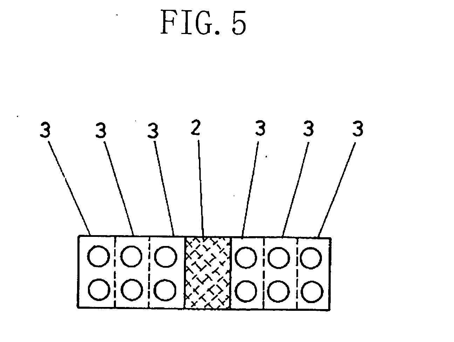

As shown in FIG. **5,** two or more air-cooled heat exchangers **3** may be connected to a single machine room **2.** This configuration allows increasing the capacity of the air-cooled heat exchangers **3** with ease and keeping the air inhalation spaces **S**_{**2**} and the maintenance space **S**_{**1**} with ease.

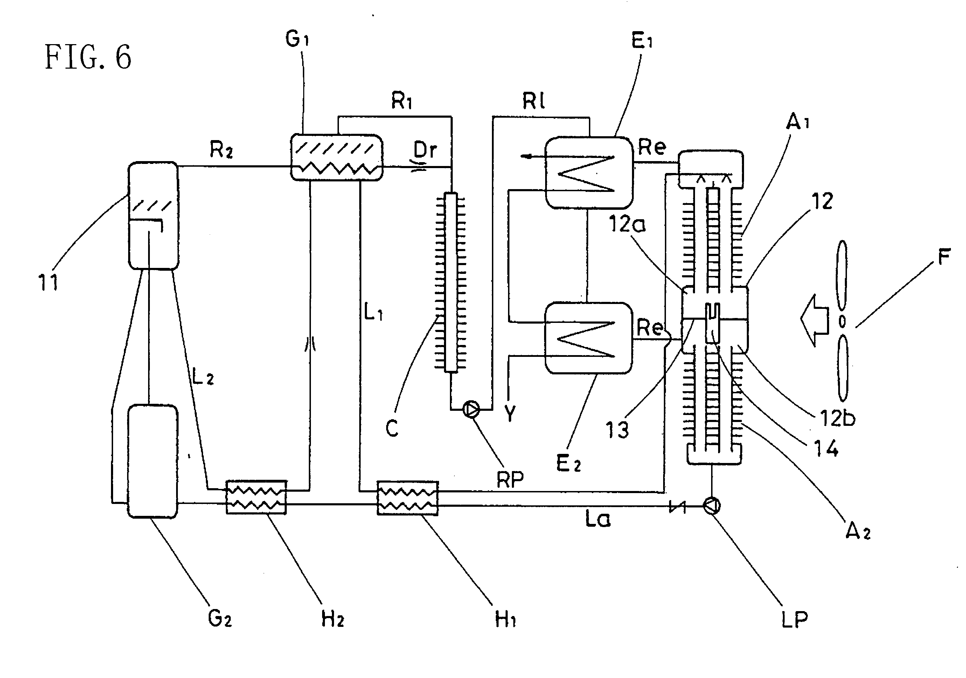

The operation cycle of the air-cooled absorption refrigerating apparatus of the above configuration is then explained with reference to FIG. **6.**

The air-cooled absorption refrigerating apparatus uses, for example, water as a coolant and lithium bromide as an absorbent solution. The air-cooled absorption refrigerating apparatus includes a single air-cooled condenser **C,** two air-cooled absorbers **A**_{**1**} and **A**_{**2**}**,** two vaporizers **E**_{**1**} and **E**_{**2**}**,** two solution heat exchangers **H**_{**2**} and **H**_{**1**} and two generators **G**_{**2**} and **G**_{**1**}. All of these components are operatively connected via solution piping and coolant piping to construct a coolant and absorbent circulation cycle.

In this embodiment, a lower header of an upper air-cooled absorber **A**_{**1**} and an upper header of the lower air-cooled absorber **A**_{**2**} are integrated as an intermediate header **12.** In the intermediate header **12,** a partition **13** is arranged to divide the inside of the intermediate header **12** into an upper chamber **12a** and a lower chamber **12b**. The partition **13** is provided with a slitted connection pipe **14** communicating with the two chambers **12a** and **12b.**

A dilute solution **La** supplied from the lower absorber **A**_{**2**} via a solution pump **LP** passes through the heat receiving sides of a low-temperature solution heat exchanger **H**_{**1**} and a high-temperature solution heat exchanger **H**_{**2**}, and then flows into a high-temperature generator **G**_{**2**}.

The dilute solution **La** flowed into the high-temperature generator **G**_{**2**} is boiled by the heat condensation effect of an external heat source (not shown) and separated into a high-temperature concentrated solution **L**_{**2**} and coolant vapor **R**_{**2**} in a gas/liquid separator **11.** The high-temperature concentrated solution **L**_{**2**} passes through the heat supplying side of the high-temperature solution heat exchanger **H**_{**2**} to flow into a low-temperature generator **G**_{**1**}. At this time, in the high-temperature solution heat exchanger **H**_{**2**}, heat exchange occurs between the dilute solution **La** in the heat receiving side and the high-temperature concentrated solution **L**_{**2**} in the heat supplying side (heat recovery). As a result, the dilute solution **La** is preheated before flowing into the high-temperature generator **G**_{**2**}.

The high-temperature concentrated solution **L**_{**2**} flowed into the low-temperature generator **G**_{**1**} is heat-condensed by the coolant vapor **R**_{**2**} flowing from the gas/liquid separator **11,** and then flows out of the generator **G**_{**1**} as a low-temperature concentrated solution **L**_{**1**} into the upper air-cooled absorber **A**_{**1**} via the heat supplying side of the low-temperature solution heat exchanger **H**_{**1**}. At this time, in the low-temperature solution heat exchanger **H**_{**1**}, heat exchange occurs between the dilute solution **La** in the heat receiving side and the low-temperature concentrated solution **L**_{**1**} in the heat supplying side (heat recovery). As a result, the dilute solution **La** is preheated before flowing into the high-temperature solution heat exchanger **H**_{**2**}.

Coolant vapor **R**_{**1**} generated in the low-temperature generator **G**_{**1**} flows into the air-cooled condenser **C** together with a coolant drain **Dr** which is a condensed flow of the coolant vapor **R**_{**2**} came from the gas/liquid separator **11** and used as a heat source for heat-condensing the high-temperature concentrated solution **L**_{**2**} in the low-temperature generator **G**_{**1**}. Thus, the coolant vapor **R**_{**1**} is condensed into a liquefied coolant **Rl.** The liquefied coolant **Rl** is pressure-fed into an upper vaporizer **E**_{**1**} through a coolant pump **RP.**

Coolant vapor **Re** generated in the upper vaporizer **E**_{**1**} flows into the upper air-cooled absorber **A**_{**1**}, while the liquefied coolant **Rl** which was not vaporized in the upper vaporizer **E**_{**1**} flows into a lower vaporizer **E**_{**2**}. Then, coolant vapor **Re** generated in the lower vaporizer **E**_{**2**} flows into the lower chamber **12b** of the intermediate header **12.** Then, a secondary refrigerant **Y** is fed from the lower vaporizer **E**_{**2**} to the upper vaporizer **E**_{**1**}.

In the upper air-cooled absorber **A**_{**1**}, the coolant vapor **Re** is absorbed into the low-temperature concentrated solution **L**_{**1**} flowed from the low-temperature generator **G**_{**1**}, thereby diluting the low-temperature concentrated solution **L**_{**1**} to some extent. The thus diluted absorbent solution accumulates in the upper chamber **12a** of the intermediate chamber **12** and then flows into the lower air-cooled absorber **A**_{**2**} via the connection pipe **14** and the lower chamber **12b** of the intermediate chamber **12,** during which the absorbent solution absorbs the coolant vapor **Re** to become a dilute solution **La.** With this configuration, the pressure of the coolant vapor **Re** in the lower air-cooled absorber **A**_{**2**} is raised. Therefore, the refrigerating apparatus is allowed to maintain the same absorption performance as that of the conventional refrigerating apparatus while reducing its height.

### INDUSTRIAL APPLICABILITY

As described above, the air-cooled absorption refrigerating apparatus of the present invention is of use for two stage air-cooled absorption refrigerating apparatuses. In particular, the present invention is suitable not only for improving easiness of transportation and installation of the refrigerating apparatus, but also reducing the size of the refrigerating apparatus.

## Claims

1. An air-cooled absorption refrigerating apparatus comprising:
an air-cooled absorber (**A**) which is divided into an upper air-cooled absorber (**A**_{**1**}) and a lower air-cooled absorber (**A**_{**2**}); and
a vaporizer (**E**) which is divided into an upper vaporizer (**E**_{**1**}) and a lower vaporizer **(E**_{**2**}**)** in correspondence with the divided air-cooled absorbers **(A**_{**1**} and **A**_{**2**}**)** such that a secondary refrigerant (**Y**) is fed from the lower vaporizer **(E**_{**2**}**)** to the upper vaporizer (**E**_{**1**}), wherein
a machine room (**2**) including a high-temperature generator (**G**_{**2**}), a low-temperature generator (**G**_{**1**}) and a space-heating heat exchanger (**B**) is provided at the longitudinal center of an apparatus body (**1**),
air-cooled heat exchangers **(3)** are arranged on both sides of the machine room **(2)** in the longitudinal direction of the apparatus body **(1),** each of the air-cooled heat exchangers including: an air-cooled heat exchanger unit **(X)** made of air-cooled absorbers **(A)** which are arranged on two opposed sides of the air-cooled heat exchanger **(3)** orthogonal to a barrier wall against the machine room **(2),** an air-cooled condenser **(C)** which is arranged between the lower ends of the air-cooled absorbers **(A)** to provide air intake surfaces below the air-cooled absorbers **(A)** and fans **(F)** which are arranged between the upper portions of the air-cooled absorbers **(A);** and a vaporizer **(E)** which is arranged substantially in the middle of the air-cooled absorbers **(A),**
the vaporizer **(E)** is so arranged that the longitudinal direction thereof is parallel to the air intake surfaces of the air-cooled absorbers **(A)** and
the air-cooled condenser **(C)** is arranged in an inverted-V configuration which is high at the center and low at both ends when viewed in vertical section.

2. An air-cooled absorption refrigerating apparatus according to claim 1, wherein
the air-cooled heat exchanger **(3)** is separatably modularized such that two or more air-cooled heat exchangers **(3)** are connected to the machine room **(2).**

3. An air-cooled absorption refrigerating apparatus according to 1 or 2, wherein
two or more unit components **(Z)** each including the machine room **(2)** and the air-cooled heat exchangers **(3)** are connected.
